# FASCICULE DE BREVET EUROPEEN

(11) **EP 0 670 535 B1**
(45) Date de publication et mention de la délivrance du brevet: **21.10.1998**
(21) Numéro de dépôt: 95440008.1
(22) Date de dépôt: 27.02.1995
(51) Int. Cl.: G05D 23/19, F24H 9/20

(54) **Procédé de régulation de la charge d'au moins un dispositif de chauffage électrique à accumulation et dispositif pour la mise en oeuvre de ce procédé**
Verfahren zur Aufladesteuerung für zumindest eine elektrische Speicherheizung und Vorrichtung zur Durchfürung dieses Verfahrens
Method for charging control of at least one storage heater and device for carrying out this method

(30) Priorité: 02.03.1994 FR 9402569
(43) Date de publication de la demande: 06.09.1995
(73) Titulaire: Claude, Nadine, F-67000 Strasbourg (FR); Bour, Sandra, F-57350 Spicheren (FR)
(72) Inventeur: Claude, Nadine, F-67000 Strasbourg (FR); Bour, Sandra, F-57350 Spicheren (FR)
(74) Mandataire: Nuss, Pierre

(56) Documents cités:
- EP-A- 0 542 653
- DE-A- 3 525 315
- DE-A- 3 823 388
- FR-A- 2 258 073
- FR-A- 2 466 165
- FR-A- 2 482 403
- US-A- 5 178 206

## Description

La présente invention concerne le domaine du chauffage de locaux, notamment le chauffage au moyen d'un ou de plusieurs dispositifs de chauffage électrique à accumulation, tels que des radiateurs électriques à accumulation, un plancher chauffant ou au moins un dispositif de chauffage à accumulation décentralisé similaire pour un local à chauffer, et a pour objet un procédé de régulation de la charge d'au moins un dispositif de chauffage électrique à accumulation, également désigné par "accumulateur" ci-après, ainsi qu'un dispositif pour la mise en oeuvre d'un tel procédé.

Ce procédé et ce dispositif précités sont adaptés aux différents modes de tarification de l'énergie électrique et de ses périodes tarifaires au cours d'un cycle de 24 heures. Ils permettent de charger le ou les dispositifs de chauffage électriques à accumulation ou accumulateurs durant les heures creuses dites "périodes à tarif réduit" et également d'effectuer une relance optimale de la charge des dispositifs de chauffage électriques à accumulation ou accumulateurs, d'une résistance additionnelle ou d'un chauffage directe complémentaire durant les heures pleines dites "périodes à plein tarif", hors heures de pointe, en fonction des besoins calorifiques du local.

Les dispositifs de régulation connus à ce jour chargent les accumulateurs en fonction de la température de consigne de régulation de la température ambiante, ou de la température extérieure et de la chaleur résiduelle contenue dans les accumulateurs. Ces dispositifs ne donnent pas entière satisfaction et présentent les inconvénients indiqués ci-dessous. En effet les appareils restituent en permanence une partie de la chaleur accumulée par rayonnement et convection libre. Les régulations basées sur la température extérieure et la chaleur résiduelle des accumulateurs engendrent lors d'apports gratuits importants de chaleur, de mauvais réglages ou d'un mauvais emplacement de la sonde extérieure, un débit de chaleur non réglable dépassant les besoins du local. En outre, en inter-saison une correction manuelle de la charge est souvent nécessaire. Le dimensionnement des accumulateurs en fonction des déperditions thermiques de chaque pièce doit être homogène. et le coût de l'installation est élevé. Par ailleurs, les régulations de la charge en fonction de la température ambiante provoquent un inconfort par la non maîtrise de l'inertie thermique des accumulateurs et une consommation excessive pendant les périodes à plein tarif, du fait de relances intempestives de la charge (modification du réglage du thermostat, apports gratuits lors du tarif réduit...). La relance de la charge n'est effectuée qu'après une chute sensible de la température ambiante ce qui, compte tenu de l'inertie thermique des appareils entraîne une importante variation de celle-ci, donc un gaspillage d'énergie. Enfin, les dispositifs de régulation connus ne sont pratiquement pas utilisables lorsque plusieurs périodes à tarif réduit sont présentes dans un cycle de 24 heures.

Le procédé et le dispositif selon l'invention permettent d'éviter notamment tous les inconvénients précités. Ils garantissent une charge optimale durant les heures à tarif réduit quelles que soient les conditions d'utilisation et d'exploitation, même en cas d'apports gratuits importants, et évitent les relances inutiles à plein tarif. Ils assurent en outre la charge et la relance éventuelle des dispositifs de chauffage électriques à accumulation ou accumulateurs en fonction des besoins thermiques spécifiques de chaque local à chauffer. Ils s'adaptent automatiquement à toutes les formes de tarification de l'énergie électrique et à tous les dimensionnements.

A cet effet, la présente invention a pour objet un procédé de régulation de la charge d'au moins un dispositif de chauffage électrique à accumulation, tel qu'un radiateur électrique à accumulation, un plancher chauffant ou analogue, caractérisé en ce qu'il consiste essentiellement, pour un local à chauffer donné, à piloter la charge ou l'opération de chargement du ou des dispositifs électriques à accumulation au cours des périodes à tarif réduit du réseau de distribution électrique d'un cycle de durée déterminée fixe, en fonction des consommations d'énergie dudit ou desdits dispositifs durant un cycle précédent identique et en fonction de la valeur de la température de consigne d'un thermostat mesurant la température ambiante et agissant sur la charge ou sur l'opération de chargement du ou des dispositifs de chauffage électrique à accumulation, ladite charge étant coupée lorsque les consommations électriques du cycle en cours ont atteint une fraction préréglée des consommations d'énergie totales du cycle précédent et lorsque la température ambiante a atteint la température de consigne du thermostat précité.

Conformément à une première caractéristique de l'invention, le procédé peut consister lorsque, en période à tarif réduit, la température ambiante est supérieure à la température de consigne du thermostat agissant sur la charge et inférieure à la température de consigne d'un deuxième thermostat régulant la température ambiante, à réaliser la charge jusqu'à atteinte d'un seuil de température ambiante préfixé sur la bande proportionnelle de ce deuxième thermostat d'ambiance, notamment du type électronique, à action proportionnelle sur la vitesse des ventilateurs de déstockage du ou des dispositifs de chauffage électriques à accumulation, dans l'intervalle défini par ladite bande proportionnelle.

Conformément à une deuxième caractéristique de l'invention, le procédé peut également consister, lorsque la température ambiante est supérieure aux températures de consigne de charge et de consigne de température ambiante, à réaliser, en période à tarif réduit, la charge aussi longtemps que ladite température ambiante est inférieure à celle obtenue par la masse calorifique globale du local.

Selon un mode de réalisation préférentiel de l'invention, le procédé de régulation peut consister d'une part, à piloter durant un cycle déterminé, la charge des dispositifs de chauffage à accumulation d'un local durant les périodes à tarif réduit en fonction des consommations du cycle précédent identique, de la valeur de la température de consigne du thermostat mesurant la température ambiante et agissant sur la charge des dispositifs de chauffage à accumulation et de la consigne affichée à un second thermostat d'ambiance de ce local fixant la vitesse de rotation des ventilateurs de déstockage et, d'autre part, à piloter le cas échéant la relance de la charge ou un chauffage direct complémentaire durant les périodes à plein tarif en fonction de la vitesse des ventilateurs de déstockage, donc de la position de la température ambiante sur la bande proportionnelle du second thermostat d'ambiance, de la valeur de la progression de la température ambiante durant un cycle de mesure déterminé et du niveau de charge des dispositifs de chauffage à accumulation.

Le procédé peut consister, lorsque la température ambiante est supérieure à la consigne de charge et à la consigne de température ambiante, à réaliser la charge, en période à tarif réduit, aussi longtemps que la valeur de la chute de la température ambiante durant le cycle de mesure est supérieure à un premier seuil préfixé sur un régulateur.

En variante, ou en plus de la disposition précédente, le procédé peut consister, lorsque la température ambiante est supérieure aux consignes de charge et de température ambiante, à réaliser la charge, en période à tarif réduit, aussi longtemps que la température ambiante ne progresse pas pendant un intervalle de temps qui s'arrête à la fin de la dernière période à tarif réduit du cycle de 24 heures en cours, la durée de cet intervalle étant ajustable et réglable.

De manière avantageuse, il peut être prévu, conformément à l'invention, de piloter le comptage et/ou le décomptage des consommations d'énergie au début de la période à tarif réduit la plus longue d'un cycle de durée déterminée, par exemple de 24 heures, ladite période étant repérée au moyen d'une synchronisation électronique laquelle pilote ledit comptage et/ou décomptage.

En variante, le procédé de régulation peut également consister à déterminer la durée correspondant à la charge totale du cycle précédent, à majorer cette durée d'une quantité déterminée de manière à obtenir une durée hypothétique de charge, en période à tarif réduit pour le cycle en cours, et à décaler l'instant de début de charge vers la fin de la ou des périodes à tarif réduit du cycle en cours, ou à centrer la période de charge par rapport à ladite ou aux dites périodes, ce en fonction de la durée hypothétique totale de charge déterminée.

Selon une caractéristique supplémentaire de l'invention, la valeur de la température de consigne du thermostat mesurant la température ambiante et agissant sur la charge, en période à tarif réduit, peut être corrigée automatiquement et proportionnellement aux besoins de chaleur, dès que l'écart entre la consigne de température ambiante et la consigne de température dudit thermostat, intégré sur la durée totale de la ou des périodes à plein tarif d'un cycle de durée déterminée dépasse la valeur autorisée par l'énergie calorifique stockée.

Conformément à une autre caractéristique supplémentaire de l'invention, le procédé de régulation et son dispositif de mise en oeuvre peuvent, le cas échéant, commander, en période à plein tarif, plusieurs dispositifs de chauffage électrique par accumulation en déterminant un dispositif principal et un ou plusieurs dispositifs secondaires dont la commande en charge et en décharge ou déstockage est asservie à celle du dispositif principal par comparaison des températures de leurs noyaux d'accumulation d'énergie calorifique respectifs à celle du noyau dudit dispositif principal.

La présente invention a également pour objet un dispositif de régulation pour la mise en oeuvre du procédé selon l'invention, dispositif caractérisé en ce qu'il est principalement constitué par un organe de sélection commandé par le ou les signaux tarifaires du réseau de distribution d'énergie électrique calé(s) sur les périodes à tarif réduit et permettant de relier, pendant les périodes à tarif réduit, un circuit de commande conditionnelle de la charge en période à tarif réduit et, le cas échéant, pendant les périodes à tarif plein autorisées, un circuit de commande conditionnelle de la charge ou d'un chauffage direct en période à plein tarif, à un organe de contrôle déterminant, par l'intermédiaire d'au moins un interrupteur l'alimentation électrique des résistances de charge du ou des dispositifs de chauffage électriques à accumulation régulés, le circuit de commande de la charge en période à tarif réduit étant composé par au moins deux branches parallèles comprenant chacune un interrupteur, commandés à l'ouverture, respectivement, d'une part, par un compteur d'énergie parmi deux compteurs présents, durant les périodes à tarif réduit, ces compteurs étant remis à zéro alternativement au début de la période principale à tarif réduit de chaque nouveau cycle et inversés dans leur mode d'utilisation en comptage ou décomptage à chacune desdites périodes à tarif réduit par un synchronisateur, et, d'autre part, par un thermostat mesurant la température ambiante et dont la consigne est fixée lors de sa fabrication, tout en étant légèrement ajustable.

Conformément à une caractéristique de l'invention, le dispositif de régulation peut comporter un second thermostat mesurant la température ambiante, dont la consigne est réglable par l'utilisateur et qui est associé à un régulateur à bande proportionnelle commandant le fonctionnement des ventilateurs de déstockage du ou des dispositifs de chauffage électriques à accumulation, un circuit de mesure de l'évolution de la température sur une période déterminée après action des ventilateurs de déstockage et de commande conditionnelle de la relance de la charge en période à plein tarif étant relié audit régulateur.

Selon un mode réalisation préférentiel de l'invention, le circuit de commande conditionnelle de la charge en période à tarif réduit comprend trois branches parallèles pouvant commander, chacune, à elle seule, la charge et, comportant, l'une un interrupteur commandé à l'ouverture par au moins un compteur d'énergie lorsque la consommation d'énergie durant les heures à tarif réduit du cycle en cours dépasse une fraction donnée, par exemple 70 %, de la consommation totale du cycle précédent de 24 heures, ou lorsque la consommation du cycle en cours, atteint la valeur de celle du cycle précédent diminué de la consommation correspondant à une durée constante, par exemple, de l'ordre de deux heures, l'autre un interrupteur commandé à l'ouverture par le premier thermostat mesurant la température ambiante lorsque cette dernière dépasse la valeur de consigne dudit thermostat, et, enfin, la dernière un interrupteur commandé à l'ouverture, le cas échéant au moyen d'un amplificateur opérationnel, par le second thermostat régulant la température ambiante lorsque cette dernière dépasse la valeur de la consigne préréglée dudit thermostat, par exemple de l'ordre de 0,2° C à 0,5° C ou une valeur prédéfinie sur sa bande proportionnelle, les compteurs d'énergie étant contrôlés par le synchronisateur qui au début de la période à tarif réduit la plus longue d'un cycle de 24 heures commande alternativement à chaque cycle la remise à zéro et le comptage de l'énergie durant 24 heures sur l'un desdits compteurs ainsi que le décomptage durant les heures à tarif réduit sur l'autre desdits compteurs.

Le circuit de commande conditionnelle de la charge en période à plain tarif comporte avantageusement une seule branche intégrant deux interrupteurs en série, dont l'un est commandé à la fermeture lorsque le niveau de charge du ou des dispositifs de chauffage électriques par accumulation chute en-dessous de la valeur de consigne d'un coupe circuit thermique, définie par la puissance calorifique maximale dudit dispositif et dont l'autre est commandé à la fermeture lorsque la vitesse des ventilateurs de déstockage est supérieure à une valeur prédéterminée définie par la position de la température ambiante sur la bande proportionnelle du thermostat et que la valeur de la progression de la température ambiante, déterminée par le circuit de mesure de l'évolution, entre le début et la fin d'un cycle répétitif de mesure de 5 à 60 minutes de durée, est inférieure à un seuil de l'ordre de 0,5° C sur 15 minutes, la valeur de ce seuil pouvant être réduite lorsque la température ambiante dépasse de quelques degrés la température de consigne de charge et la relance de la charge pouvant être coupée lorsque ce dépassement atteint une valeur prédéterminée.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 représente les périodes tarifaires pendant le cycle précédent (de 0 heure à 0 heure) ainsi que les périodes de charge et de relance des dispositifs de chauffage électrique à accumulation ou accumulateurs (Repère A) ;
la figure 2 représente les périodes tarifaires du cycle en cours (de 0 heure à 0 heure), ainsi que, d'une part, les périodes de charge définies par prise en compte de la durée de charge du cycle précédent (Repère B), par prise en compte de la consigne d'un thermostat agissant sur la charge (Repère C), et par prise en compte éventuellement de la température de consigne d'un second thermostat agissant sur les ventilateurs de déstockage (Repère D) et, d'autre part, les périodes de relance éventuelle hors tarif réduit (Repère E) ;
la figure 3 représente les variations de la température ambiante durant le cycle en cours et les températures de consigne "confort" et "réduit" ;
la figure 4 représente l'évolution de la vitesse des ventilateurs de déstockage en fonction de la température ambiante effectuée par le second thermostat de température ;
la figure 5 représente les seuils de la température ambiante durant le cycle de mesure en cas de fonctionnements normal (standard) et accéléré (turbo) du dispositif de régulation ;
la figure 6 est un schéma synoptique du dispositif de synchronisation électronique ou synchronisateur repérant le début de la période à tarif réduit la plus longue du cycle considéré, et,
la figure 7 est une représentation schématique du dispositif de régulation selon l'invention.

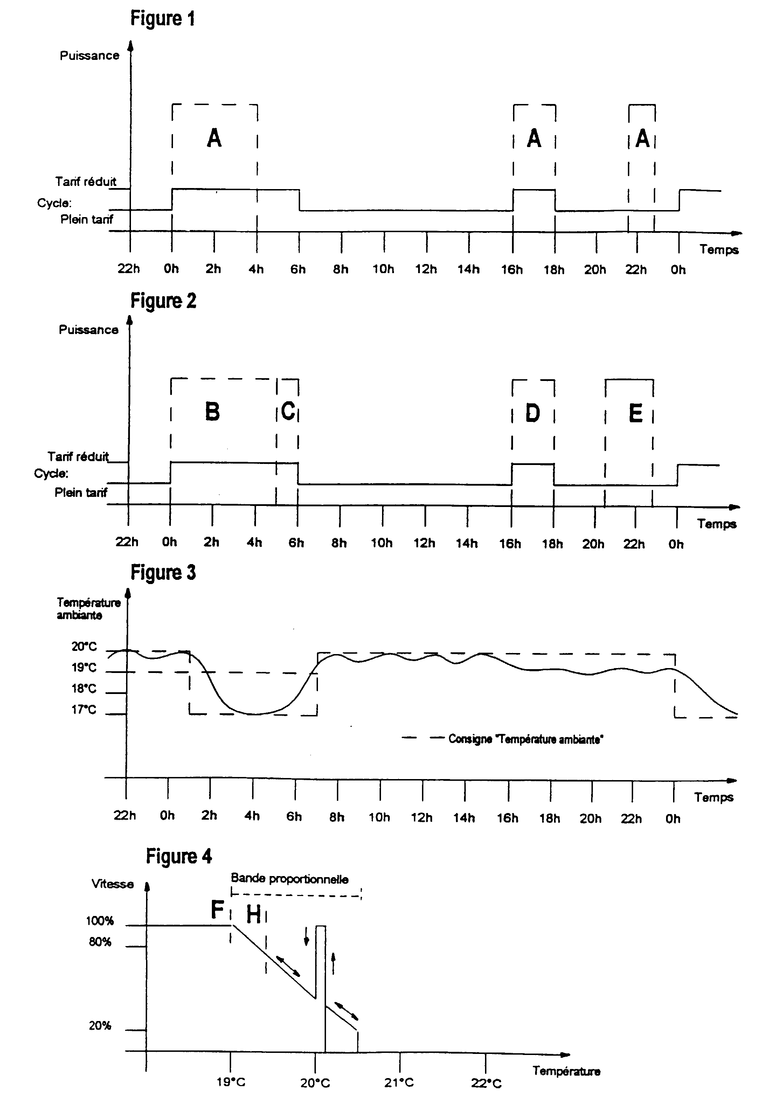

Comme le montre la figure 4 des dessins annexés, la charge des dispositifs de chauffage électrique à accumulation, est généralement effectuée par l'alimentation des résistances électriques 14, placées dans leurs noyaux accumulateurs.

Le dispositif de régulation comprend essentiellement deux compteurs-décompteurs C3, C4 permettant de comparer les consommations d'énergie de deux cycles successifs, avantageusement de 24 heures chacun, un thermostat de charge 7 réglé d'usine à 19° C ajustable à +/- 5° C, un circuit 33 de mesure et de comparaison des variations de la température ambiante durant un cycle de mesure répétitif, un coupe circuit thermique 11 commandé par la température du ou des noyaux et, éventuellement, un thermostat d'ambiance 19 électronique à consigne variable, comportant un ou plusieurs seuils de commande fixés par un régulateur 20 sur la bande proportionnelle.

Le thermostat d'ambiance électronique 19 à action proportionnelle éventuellement présent, régule avec précision la température du local en faisant varier la vitesse des ventilateurs de déstockage 18 dans l'intervalle défini par la bande proportionnelle. La vitesse des ventilateurs de déstockage varie ainsi proportionnellement aux besoins calorifiques de celui-ci et au niveau de charge des accumulateurs.

Le fonctionnement du procédé de régulation de la charge selon l'invention sera mieux compris grâce aux explications ci-après, en référence aux figures 1 à 5 des dessins annexés.

Durant les périodes à tarif réduit, la charge du ou des dispositifs de chauffage à accumulation ou accumulateurs est maintenue jusqu'à la réalisation des deux conditions suivantes :

1)- La consommation d'énergie durant les périodes à tarif réduit du cycle de 24 heures en cours (rep.B, Fig. 2) doit être égale à une fraction déterminée, par exemple 70 %, des consommations totales d'énergie (tarif réduit + plein tarif) du cycle précédent de 24 heures. (Rep.A, Fig. 1). Cette fraction ou ce pourcentage retenu ,compris généralement entre 40 % et 90 %, peut éventuellement être optimisé.

La valeur de la charge minimale ainsi définie évite que l'inertie thermique du local et des accumulateurs et les apports éventuels de chaleur extérieurs aux dispositifs de chauffage, n'influencent le fonctionnement de la régulation. La consommation de référence du précédent cycle de 24 heures peut aussi être remplacée par la consommation moyenne de plusieurs cycles successifs. Toutefois, ceci augmentera l'inertie du procédé de régulation qui du fait de l'inertie des accumulateurs est déjà suffisante pour assurer un grand confort.

Dans certaines applications particulières (tarif avec heures de pointe à consommation verrouillée par exemple), la différence de consommation restante à la fin de la période à tarif réduit pourra servir à affiner la charge avant le début des heures de pointe.

Les consommations d'énergie sont mesurées par deux compteurs-décompteurs C3, C4 fonctionnant alternativement durant un cycle en comptage et en décomptage le cycle suivant.

Sur la position hors gel de l'interrupteur 9 "Confort - Hors Gel" la consommation d'énergie est sans effet sur la charge.

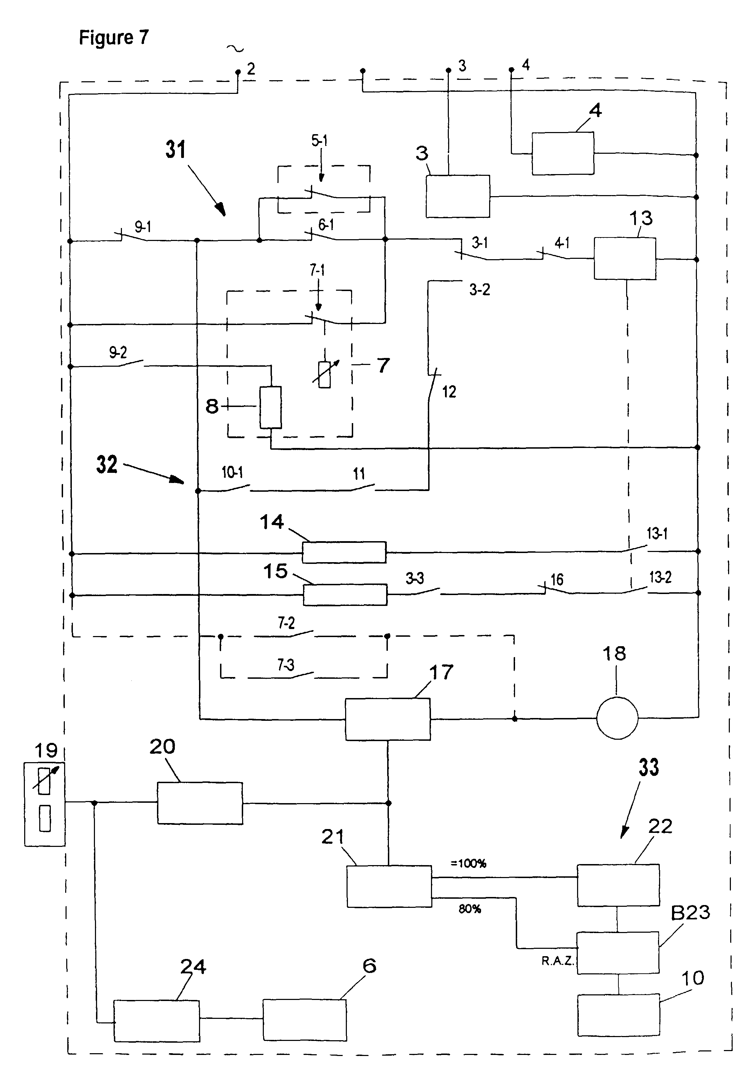

2)- La température ambiante a atteint la température de consigne de 19° C du thermostat de charge 7 (RepC, Fig. 7). Cette consigne est ajustable, par l'installateur exclusivement, dans une plage de +/- 5°C environ.

Les courbes de la puissance calorifique émise en régime statique, fonction de la quantité d'énergie stockée dans le ou les accumulateurs, définissent la valeur de la température de consigne du thermostat de charge 7. Ces courbes varient avec le niveau d'isolation thermique des accumulateurs. La valeur de la température de consigne de ce thermostat 7 définit un point d'équilibre entre la déperdition thermique du local et l'émission calorifique statique du ou des accumulateurs, au niveau duquel, lorsque la capacité d'accumulation du ou des dispositifs de chauffage électriques à accumulation est suffisante, la quantité d'énergie stockée doit être égale ou supérieure aux besoins d'énergie de la période suivante à plein tarif. Cette valeur de la température de consigne de charge peut aussi être corrigée automatiquement et proportionnellement aux besoins de chaleur, dès que l'écart entre la consigne de température ambiante et celle de la charge intégré sur la durée totale de la ou des périodes à plein tarif du cycle de 24 heures, dépasse la valeur autorisée par l'énergie stockée. Pour établir cet écart, le régulateur 20 retiendra les valeurs des consignes "confort" et "réduit" de la température ambiante programmées lors du cycle suivant la période à tarif réduit. Si la programmation est inexistante, celles des précédents cycles de 24 heures peuvent aussi être considérées et retenues.

Lorsque la température ambiante est supérieure aux températures des consignes de charge et de température ambiante, la charge est effectuée aussi longtemps que ladite température ambiante est inférieure à celle obtenue par la masse calorifique globale de la pièce.

Il est possible d'éviter de mettre en équation les différentes caractéristiques permettant de calculer la masse calorifique globale de la pièce et donc les températures qu'elle engendre lors des périodes d'abaissement de la consigne de température ambiante. A cette fin, la charge du ou des accumulateurs est effectuée aussi longtemps que la température ambiante ne progresse pas durant une période réglable qui s'arrête à la fin de la dernière période des heures à tarif réduit du cycle de 24 heures en cours. La durée de cette période peut éventuellement être ajustée en fonction de la masse calorifique donc de l'inertie du bâtiment.

Avant cette période, la charge peut également être effectuée aussi longtemps que la valeur de la chute de la température ambiante durant le cycle de mesure est supérieure au seuil fixé par le régulateur 20.

Sur la position hors gel de l'interrupteur "Confort - hors gel" 9, la température de consigne de charge est réduite de l'ordre de 5 à 10° C par mise sous tension d'une résistance 8 d'abaissement de la valeur de la consigne. La commande de l'interrupteur hors gel 9 réduit automatiquement la valeur de la consigne de température ambiante en dessous de la valeur de la consigne de charge du thermostat 7.

Eventuellement, une troisième condition peut conditionner l'arrêt de la charge, à savoir le fait que :

3)- La température ambiante ait atteint la consigne du second thermostat d'ambiance 19 majorée de l'ordre de 0,2 à 0,5° C (rep. D, Fig. 2), ou que la température ambiante dépasse l'un des seuils sélectionnés par le régulateur 20 sur la bande proportionnelle, donc lorsque la vitesse des ventilateurs 18 devient inférieure à celle correspondant au seuil de sélection. La valeur des seuils est fonction des caractéristiques techniques des dispositifs de chauffage à accumulation et de celles du tarif. A chacun de ces seuils correspond un niveau de vitesse de rotation des ventilateurs 18 et à chaque niveau de vitesse , une puissance calorifique émise qui varie avec la quantité de chaleur stockée dans le ou les accumulateurs. La relation entre la vitesse des ventilateurs, la puissance calorifique émise et le niveau de charge des radiateurs est donnée par les courbes caractéristiques des radiateurs établies dans un calorimètre. L'équilibre thermique entre les déperditions du local et la puissance émise par les accumulateurs au seuil défini par le régulateur sur la bande proportionnelle permet donc de définir avec précision un niveau de charge qui variera proportionnellement aux besoins d'énergie du local.

Sur la position hors gel de l'interrupteur "Confort - Hors Gel" 9, cette condition du thermostat d'ambiance 19 est sans effet sur la charge.

Le procédé de régulation selon l'invention permet également de décaler la charge des dispositifs de chauffage électriques à accumulation ou des radiateurs vers la fin de la période à tarif réduit. Dans ce cas le début de la charge est fixé en fonction des consommations du cycle précédent de 24 heures majorées l'ordre de 5 à 50 % afin de tenir compte des variations climatiques. Pour calculer l'heure de début de la charge durant la période à tarif réduit, le dispositif de régulation permet de déduire de la durée totale de la période à tarif réduit la durée correspondant à la consommation totale du cycle précédent de 24 heures majorée de 5 à 50 %. Si le résultat est positif, il est rajouté à l'heure du début du tarif réduit. La nouvelle heure ainsi obtenue est celle du début de la charge. Si le résultat est négatif, la charge est lancée immédiatement au début du tarif réduit. Un calcul selon une méthode identique est effectué lorsque les consommations à tarif réduit sont centrées sur le milieu de la période. Lorsque les consommations de la période précédente de 24 heures sont nulles, la charge durant les heures à tarif réduit du cycle en cours ne sont pas transférées vers la fin des heures à tarif réduit. Durant cette période la charge est effectuée conformément au fonctionnement sans décalage de charge.

Par ailleurs, la charge est systématiquement coupée lorsque la température maximale du noyau est atteinte.

Durant les périodes à plein tarif, la relance de la charge du ou des dispositifs de chauffage électriques à accumulation ou accumulateurs d'un local est réalisée lorsque les deux conditions suivantes sont simultanément réalisées :

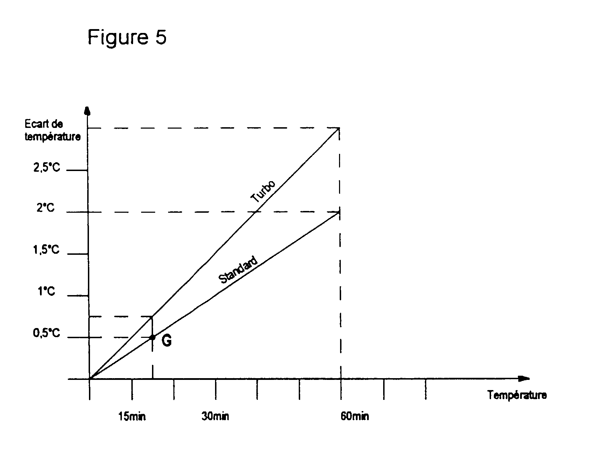

1)- La vitesse des ventilateurs de déstockage 18 étant maximale durant plusieurs secondes (pour éviter l'influence de l'impulsion de démarrage), la progression de la température ambiante du local doit être inférieure à une valeur de "X"° C durant un cycle de mesure de l'ordre de 5 à 60 minutes. La valeur choisie pour "X" (0,5° C environ en 15 minutes) est fonction de l'optimisation du coût d'exploitation et du confort souhaité (F sur Figure 4 et G sur Figure 5). Lorsque la régulation est mise en oeuvre avec des tarifs de l'énergie électrique imposant des coupures de l'alimentation des résistances 14 des dispositifs de chauffage à accumulation électriques durant certaines périodes de pointe du cycle de 24 heures correspondant, en général, à une très forte charge du réseau de distribution de l'énergie électrique, un socle de chaleur est maintenu avant coupure de l'alimentation des dispositifs de chauffage à accumulation ou radiateurs, proportionnellement au temps de coupure et aux besoins thermiques du local. Dans ce cas, la relance de la charge est réalisée après temporisation, lorsque la température ambiante devient inférieure au seuil sélectionné sur la bande proportionnelle, donc lorsque la valeur de la vitesse des ventilateurs 18 est supérieure à celle de ce seuil, définissant le socle de chaleur nécessaire dans le radiateur et que la progression de la température ambiante du local est inférieure à une valeur de "X"° C durant le cycle de mesure. Lorsque la température ambiante dépasse de plus de 2 à 4° C environ de la consigne de charge, la valeur du seuil "X" est réduite. La relance est coupée lorsque ce dépassement atteint une valeur prédéterminée Ce seuil de progression de la température ambiante peut aussi être calculé par le régulateur proportionnellement ou exponentiellement à l'écart de la température ambiante par rapport à la consigne.

A ce sujet, il convient de rappeler que la puissance calorifique des accumulateurs ou dispositifs de chauffage à accumulation est définie par les seuils de vitesse des ventilateurs 18 et par la quantité d'énergie stockée. Elle est fonction des caractéristiques des appareils ou dispositifs de chauffage des différents fabricants. Ces derniers, en tenant compte de la durée des périodes de coupure de l'alimentation des résistances des radiateurs, définissent donc les seuils de vitesse correspondant au stock d'énergie souhaité. Ces seuils, une fois fixés, régulent ensuite automatiquement et proportionnellement le niveau de l'énergie stockée, en fonction des besoins calorifiques du local. Ce procédé de régulation est plus précis, plus adapté aux besoins que celui basé sur la température extérieure, actuellement utilisé en Allemagne.

Un régulateur 20 peut comporter plusieurs seuils de vitesse, commandés par exemple par le synchronisateur calé sur le début des heures à tarif réduit, définissant ainsi différents socles de chaleur stockée, afin d'adapter la régulation éventuellement à des durées de coupure de courant variables sur une période de 24 heures. Vers la fin de la période à plein tarif, le stock de chaleur dans le radiateur ou dispositif de chauffage à accumulation doit être réduit au minimum, afin d'utiliser le maximum d'énergie disponible durant les heures à tarif réduit. Il est alors souhaitable de n'autoriser la relance de la charge que lorsque la vitesse maximale des ventilateurs est atteinte.

2)- Le niveau de charge du radiateur est inférieur à la valeur de la consigne du coupe circuit thermique 11. Celle-ci de l'ordre de 80 % de la charge totale, correspond à la puissance calorifique maximale des appareils ou dispositifs de chauffage à accumulation. Cette dernière, pour des appareils bien conçus, ne devrait jamais régresser durant toute la période de charge et devrait atteindre son maximum à pleine charge.

La relance de jour est coupée, après une période de temporisation, lorsque l'une des deux conditions précitées n'est plus réalisée, ou lorsque la vitesse des ventilateurs passe en dessous d'un pourcentage de l'ordre de 80 % de la vitesse maximale (rep.H, Fig. 4). Le pourcentage retenu, variable de 100 à 50 % et la valeur retenue pour "X" définissent automatiquement le socle d'énergie maintenu dans les radiateurs ou dispositifs de chauffage à accumulation similaires proportionnellement aux conditions climatiques extérieures, donc le rapport de l'émission de chaleur par rayonnement et convection. Ils déterminent également la durée maximale de délestage possible des radiateurs ou dispositifs de chauffage à accumulation. Ils influencent évidemment le rapport de la consommation à tarif réduit sur celle à plein tarif.

Sur la position "Hors Gel" de l'interrupteur "Confort Hors - Gel" la relance de la charge à plein tarif n'est en règle générale pas nécessaire. La valeur de la consigne de température ambiante est alors maintenue en dessous de la valeur de celle pilotant la charge.

Ce procédé permet aussi de corriger la charge d'autres accumulateurs placés dans le même local selon un principe de fonctionnement du type maître/esclave. Le dispositif de chauffage à accumulation ou accumulateur "maître" communique en permanence la température de son noyau accumulateur aux noyaux des dispositifs "esclaves", qui la comparent à celle de leur propre noyau pour réaliser l'asservissement durant la période à plein tarif par les moyens suivants :
- lorsque la relance de la charge n'est pas effectuée et lorsque la vitesse ventilateurs du dispositif "maître" n'est pas maximale, la vitesse de fonctionnement des dispositifs "esclaves" dont la température du noyau est inférieure à celle du dispositif "maître" est réduite de la fraction correspondant à l'écart maximal existant entre le rapport de la puissance calorifique maximale et minimale à pleine charge de la série de dispositifs ou d'appareils de chauffage du fabricant, ceci jusqu'à obtention de l'égalité des températures des noyaux. Si la température du noyau d'un des appareils "esclave" est supérieure à celle du "maître", la vitesse du ou des ventilateurs de ce dernier est réduite dans les mêmes proportions.
- lorsque la relance de la charge est en cours, celle-ci est verrouillée par les dispositifs de chauffage à accumulation ou accumulateurs "esclaves" dont la température du noyau est supérieure à celle du dispositif "maître", jusqu'à obtenir l'égalité des températures. Si la température du noyau d'un des dispositifs "esclave" est inférieure à celle du dispositif "maître", la relance de la charge du dispositif "maître" est arrêtée jusqu'à obtenir l'égalité des températures. Une certaine tolérance des vitesses et des températures est incluse dans la comparaison afin de stabiliser la régulation.

Il est intéressant de noter que le choix judicieux des périodes d'heures creuses, juste avant les périodes de pointe, permet de réduire au minimum le socle de chaleur résiduelle à maintenir durant les heures à tarif plein. En effet, après chaque période à tarif réduit la relance de la charge peut systématiquement être verrouillée durant plusieurs heures. La durée de ce verrouillage est fonction du rapport de la puissance installée des dispositifs de chauffage ou radiateurs à accumulation sur les déperditions thermiques du local. Différentes options peuvent compléter cette régulation.

Ainsi, afin d'éviter un abaissement trop élevé de la température ambiante dans les immeubles collectifs, lors d'une réduction anormale de la consigne du thermostat durant les périodes à plein tarif, une consigne complémentaire "température réduite" du thermostat de charge 7 ( de 2 à 5° C inférieure à la consigne de référence de 19° C et inaccessible à l'usager) agit sur la commande des ventilateurs 18, en priorité sur le thermostat d'ambiance 19 (interrupteur 7-2 sur la Fig. 7). En outre, un interrupteur complémentaire "réduit permanent" diminue de 1 à 2° C la température de consigne de charge et affiche automatiquement la température de consigne du régime réduit au thermostat d'ambiance 19. Il permet de chauffer au plus juste les pièces inoccupées. Son action est automatiquement interrompue lorsque l'utilisateur sélectionne à nouveau le régime "confort" au niveau du thermostat d'ambiance 19.

Il peut également être prévu un mode de fonctionnement accéléré, désigné par exemple par "TURBO", qui peut être sélectionné par un bouton poussoir correspondant. Ce dernier augmente de 1 à 2° C la consigne du thermostat d'ambiance et de 0,2 à 0,4° C la valeur de "X". L'effet "TURBO" est supprimé dès que la consigne est atteinte.

La présente invention a également pour objet une construction de dispositif de régulation pour la mise en oeuvre du procédé décrit précédemment.

Ce dispositif est principalement constitué par un organe de sélection 3, 3-1 ,3-2 commandé par le ou les signaux tarifaires du réseau de distribution d'énergie électrique calé(s) sur les périodes à tarif réduit et permettant de relier, pendant les périodes à tarif réduit, un circuit 31 de commande conditionnelle de la charge en période à tarif réduit et, le cas échéant, pendant les périodes à tarif plein autorisées, un circuit 32 de commande conditionnelle de la charge ou d'un chauffage direct en période à plein tarif, à un organe de contrôle 13 déterminant, par l'intermédiaire d'au moins un interrupteur 13-1, 13-2 l'alimentation électrique des résistances de charge 14 et les résistances supplémentaires pour chauffage direct 15 du ou des dispositifs de chauffage électriques à accumulation régulés, le circuit 31 de commande de la charge en période à tarif réduit étant composé par au moins deux branches parallèles comprenant chacune un interrupteur 5-1, 7-1, commandés à l'ouverture, respectivement, d'une part, par un compteur d'énergie C3 ou C4 parmi deux compteurs présents, durant les périodes à tarif réduit, ces compteurs étant remis à zéro alternativement au début du cycle de la période principale à tarif réduit de chaque nouveau cycle et inversés dans leur mode d'utilisation en comptage ou décomptage à chacune desdites périodes à tarif réduit par un synchronisateur 30, et, d'autre part, par un thermostat 7 mesurant la température ambiante et dont la consigne est fixée lors de sa fabrication, tout en étant légèrement ajustable.

En outre, ledit dispositif de régulation comporte avantageusement un second thermostat 19 mesurant la température ambiante, dont la consigne est réglable par l'utilisateur et qui est associé à un régulateur 20 à bande proportionnelle commandant le fonctionnement des ventilateurs de déstockage 18 du ou des dispositifs de chauffage électriques à accumulation, un circuit 33 de mesure de l'évolution de la température sur une période déterminée après action des ventilateurs de déstockage 18 et de commande conditionnelle de la relance de la charge en période à plein tarif étant relié audit régulateur 20.

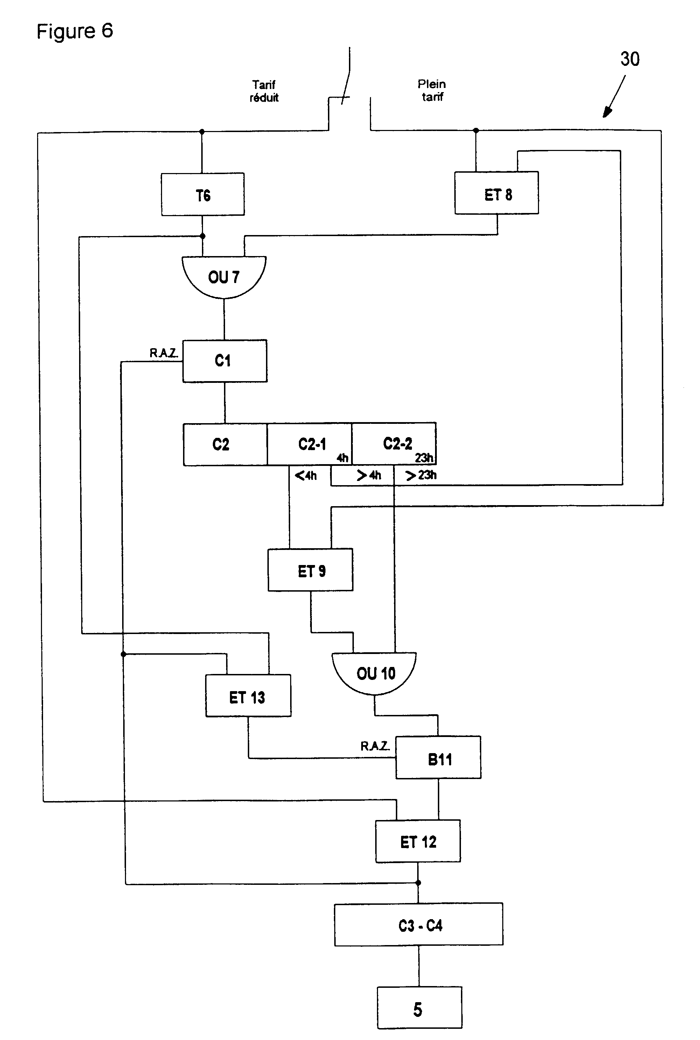

La figure 6 des dessins annexés reprend le schéma logique du dispositif de synchronisation ou synchronisateur 30 du cycle de mesure sur le début de la période principale à tarif réduit. (période la plus longue du cycle de mesure). Ce dispositif pilote les deux compteurs d'énergie C3 et C4. A ce sujet, on peut noter que ces derniers peuvent être de simples compteurs de temps de mise sous tension des résistances de charge, car la consommation d'énergie est directement proportionnelle à ce temps.

Le dispositif de synchronisation 30 fonctionne comme décrit ci-après.

A la mise en service du chauffage, dès atteinte de la première période à tarif réduit, le compteur C1 est raccordé au signal tarif réduit par l'intermédiaire du temporisateur T6 et du circuit OU 7. Il totalise la durée du signal. La temporisation de quelques secondes du signal évite la perturbation du synchronisateur par les phénomènes transitoires et les tests de simulation du tarif réduit. La durée de ce signal est ensuite comparée dans C2-1 à une constante de temps de l'ordre de 4 heures représentant la durée minimale de la période principale à tarif réduit. Si au début de la période suivante à plein tarif, elle est inférieure à la constante, le compteur Cl est remis à zéro par le circuit ET 9, OU 10, la bascule B11 et le circuit ET 12. Le cycle de mesure est relancé à chaque début de période à tarif réduit jusqu'à obtention d'une durée de signal supérieure à la constante. Dans ce cas, le compteur C1 par le circuit ET 8, OU 7 cumule les heures à plein tarif et celles à tarif réduit. Ce cumul est comparé dans C2-2 à la deuxième constante de l'ordre de 23 heures. La durée de cette constante doit être supérieure à l'écart de temps séparant le début de la première et la fin de la dernière période à tarif réduit d'un cycle de 24 heures. Elle permet aussi de rétablir la synchronisation après coupure de courant. Lorsque C1 devient supérieur à cette constante, la bascule 11 est commandée par le circuit OU 10. A la prochaine période à tarif réduit, C1 est remis à zéro par le circuit ET 12, et la bascule B11 par le circuit ET 13.

La synchronisation du cycle de mesure de 24 heures sur le début de la période principale à tarif réduit est alors réalisée. Ce cycle pilote les 2 compteurs d'énergie (ou de temps) C3 et C4 comme suit :

Au début de chaque cycle, le compteur qui était en décompte le cycle précédent est remis à zéro et passe en comptage de l'énergie consommée durant les heures à tarif réduit et à plein tarif du cycle en cours, alors que celui qui était en comptage, décompte l'énergie consommée durant les heures à tarif réduit uniquement. A noter qu'automatiquement, à la mise en service du chauffage, les deux compteurs C3 et C4 sont d'abord remis à zéro puis l'un des deux compteurs est systématiquement utilisé en comptage et le second des deux compteurs en décomptage. Les coupures de courant supérieures à 1 heure entraîneront une remise à zéro de tous les compteurs, donc un nouveau processus de synchronisation du cycle de mesures. Le compteur utilisé en décomptage durant la période à tarif réduit enclenche l'interrupteur 5 dès que la consommation du cycle précédent de 24 heures a été réduite de 70 %. Le décomptage est alors arrêté.

La figure 7 des dessins annexés représente plus précisément le schéma du dispositif de régulation de la charge des dispositifs de chauffage électrique ou radiateurs à accumulation.

La description ci-après du dispositif de régulation est effectuée plus particulièrement sur la base d'une réalisation des organes de sélection, des thermostats et des interrupteurs sous forme de contacts mécaniques ou d'éléments munis de contacts mécaniques, notamment de contacts de relais. Toutefois, les organes de sélection, les thermostats et les différents interrupteurs peuvent également consister en des circuits électroniques.

Le contact 3-1 du relais 3 est fermé durant les heures à tarif réduit et les contacts 3-2 et 3-3 sont fermés durant les heures à plein tarif. Le contact 4-1 du relais de délestage 4 est ouvert aux périodes de délestage. Le contact 9-1 est fermé et le contact 9-2 est ouvert lorsque l'interrupteur 9 "Confort-Hors gel" est sur la position confort. Cet organe de sélection 9, 9-1, 9-2 est relié à une résistance chauffante 8 influençant la valeur de la consigne du premier thermostat 7 de mesure de température ambiante, en la réduisant de l'ordre de 5° C à 10° C environ, lorsque l'organe de sélection est sur la position hors-gel.

Le contact 7-2 du thermostat 7, réglé d'usine se ferme à 16° C environ et maintient cette température minimale dans le local à l'exception de la période hors gel durant laquelle la température ambiante est régulée par le contact 7-3 placé en parallèle de 7-2.

Le relais contacteur 13 alimente par le contact 13-1 les résistances de charge 14 placées dans le noyau accumulateur du ou des dispositifs de chauffage électriques à accumulation, et par 13-2 la résistance additionnelle 15 ou le chauffage direct complémentaire. Ceux-ci peuvent aussi être asservis au contact 3-3 et à l'interrupteur "Marche Arrêt" 16.

La sonde de température ambiante associée au potentiomètre de réglage de la consigne 19 communique au régulateur 20 une tension variable proportionnelle à l'écart entre la mesure et la consigne. Le régulateur 20 à bande proportionnelle commande le triarc 17 par un interrupteur qui commute le signal au zéro de tension. Le triarc met sous tension les ventilateurs 18 pendant un temps proportionnel à l'écart entre la température mesurée par la sonde et la consigne, ceci dans les limites de la bande proportionnelle. La vitesse des ventilateurs est ainsi régulée proportionnellement à cet écart de température.

La commande de la charge durant les heures à tarif réduit est réalisée comme décrit ci-dessous.

Au début de la période la charge est enclenchée par la fermeture du contact 13-1 du relais 13. La charge est coupée après l'ouverture des contacts 5-1, 6-1, et 7-1. Le contact 5-1 du relais 5 commandé par les compteurs d'énergie C3 et C4, s'ouvre lorsque la consommation durant les heures à tarif réduit dépasse 40 à 90 %, préférentiellement 70 % environ de la consommation totale du précédent cycle de 24 heures, cette fraction étant ajustable. Le contact 6-1 du relais 6 commandé par l'amplificateur opérationnel 24 s'ouvre, après temporisation, lorsque la température ambiante dépasse de 0,2 à 0,5° C la température de consigne du thermostat 19 ou lorsque la température ambiante dépasse l'un des seuils sélectionnés par le régulateur sur la bande proportionnelle, donc lorsque la vitesse des ventilateurs devient inférieure à celle correspondant au seuil de sélection. Le contact 7-1 s'ouvre en régime confort lorsque la température ambiante dépasse la consigne du thermostat réglé d'usine à 19° C ajustable à +/- 5° C.

En variante, il peut être prévu que lorsque la température ambiante est supérieure aux températures des consignes de charge et de température ambiante, la charge soit effectuée aussi longtemps que ladite température ambiante est inférieure à celle obtenue par la masse calorifique globale de la pièce.

Il est aussi possible d'éviter de mettre en équation les différentes caractéristiques permettant de calculer la masse calorifique globale de la pièce et donc les températures qu'elle engendre lors des périodes d'abaissement de la consigne de température ambiante. A cet effet, la charge du ou des accumulateurs est effectuée aussi longtemps que la température ambiante ne progresse pas durant une période réglable qui s'arrête à la fin de la dernière période des heures à tarif réduit du cycle de 24 heures en cours. La durée de cette période peut éventuellement être ajustée en fonction de la masse calorifique donc de l'inertie du bâtiment. Avant cette période, la charge peut également être effectuée aussi longtemps que la valeur de la chute de la température ambiante durant le cycle de mesure est supérieure au seuil fixé par le régulateur.

La commande de la relance durant les heures à plein tarif peut avantageusement être réalisée comme indiquée ci-après.

Comme le montre la figure 7, l'interrupteur 12 permet de couper manuellement la relance, celle-ci étant enclenchée à la fermeture des contacts 10-1 et 11. Le contact 11 du coupe circuit thermique ferme lorsque la charge résiduelle du dispositif de chauffage ou radiateur à accumulation chute en dessous de la valeur correspondante à la puissance calorifique maximale dudit dispositif. La vitesse des ventilateurs ou turbines mesurée par l'amplificateur opérationnel 21 déclenche, lorsque la température ambiante atteint l'un des seuils fixés par le régulateur sur la bande proportionnelle, le circuit intégré 22 qui mesure la progression "X" de la température ambiante au cours de cycles de mesure répétitifs de 5 à 60 minutes de durée. Lorsque la progression de "X" entre le début et la fin du cycle est inférieure à une valeur de l'ordre de 0,5° C, la bascule B23 excite le relais 10 qui ferme son contact 10-1. L'amplificateur opérationnel 21 remet à zéro la bascule B23 lorsque la température ambiante dépasse le seuil sélectionné sur la bande proportionnelle et coupe à la fin du cycle de mesure le relais 10 qui ouvre son contact.

Lorsque l'interrupteur 9 est sur position hors gel, la résistance chauffante 8 influence le thermostat de charge 7 et réduit de 5 à 10° C sa consigne. La charge est alors régulée par le contact 7-1. les contacts 5-1, 6-1, 10-1, et 11 sont placés hors circuit et les ventilateurs de déstockage 18 sont commandés par le contact 7-3 placé en parallèle à 7-2 dont le seuil d'enclenchement est réglé 1 à 2°C en dessous de la valeur du seuil de 7-1.

Selon l'invention, il peut également être prévu que le régulateur 20 bloque le fonctionnement dudit dispositif et émet, le cas échéant, un signal d'avertissement, lorsque les caractéristiques techniques d'un dispositif de chauffage électrique à accumulation au moins, relié audit dispositif, ne correspondent pas aux paramètres enregistrés dans ledit régulateur 20.

Il convient de noter que la vitesse des ventilateurs est directement définie par la position de la température ambiante sur la bande proportionnelle. De ce fait lorsque la régulation est utilisée avec des dispositifs de chauffage sous forme de radiateurs statiques ou d'un plancher chauffant, associés ou non à des résistances directes, la relance du niveau de charge ou de la résistance directe durant les périodes à plein tarif est effectuée en fonction de la position de la température ambiante par rapport à la bande proportionnelle et des variations de la température ambiante durant le cycle de mesure. La charge durant les périodes à tarif réduit est effectuée conformément au descriptif ci-dessus.

Il convient également de noter que les deux thermostats mesurant la température ambiante peuvent être remplacés par un thermostat électronique unique à plusieurs consignes de réglage indépendant. La première consigne réglée par l'usager régule la température ambiante souhaitée. Elle commande le fonctionnement des ventilateurs de déstockage de la chaleur. Les autres consignes réglées d'usine commandent la charge des accumulateurs et fixent différentes valeurs limites de température.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de régulation de la charge d'au moins un dispositif de chauffage électrique à accumulation, tel qu'un radiateur électrique à accumulation, un plancher chauffant ou analogue, caractérisé en ce qu'il consiste essentiellement, pour un local à chauffer donné, à piloter la charge ou l'opération de chargement du ou des dispositifs électriques à accumulation au cours des périodes à tarif réduit du réseau de distribution électrique d'un cycle de durée déterminée fixe, en fonction des consommations d'énergie dudit ou desdits dispositifs durant un cycle précédent identique et en fonction de la valeur de la température de consigne d'un thermostat mesurant la température ambiante et agissant sur la charge ou sur l'opération de chargement du ou des dispositifs de chauffage électrique à accumulation, ladite charge étant coupée lorsque les consommations électriques du cycle en cours ont atteint une fraction préréglée des consommations d'énergie totales du cycle précédent et lorsque la température ambiante a atteint la température de consigne du thermostat précité.

2. Procédé selon la revendication 1, caractérisé en ce qu'il consiste, lorsque la température ambiante est supérieure à la température de consigne du thermostat agissant sur la charge et inférieure à la température de consigne d'un deuxième thermostat régulant la température ambiante, à réaliser la charge jusqu'à atteinte d'un seuil de température ambiante préfixé sur la bande proportionnelle de ce deuxième thermostat d'ambiance, notamment du type électronique, à action proportionnelle sur la vitesse des ventilateurs de déstockage du ou des dispositifs de chauffage électriques à accumulation, dans l'intervalle défini par ladite bande proportionnelle.

3. Procédé selon l'une quelconque des revendications 1 et 2 caractérisé en ce qu'il consiste, lorsque la température ambiante est supérieure aux températures de consigne de charge et de consigne de température ambiante, à réaliser, en période à tarif réduit, la charge aussi longtemps que ladite température ambiante est inférieure à celle obtenue par la masse calorifique globale du local.

4. Procédé, selon l'une quelconque des revendications 1 à 3 caractérisé en ce qu'il consiste, d'une part, à piloter, durant un cycle déterminé, la charge des dispositifs de chauffage à accumulation d'un local durant les périodes à tarif réduit en fonction des consommations du cycle précédent identique, de la valeur de la température de consigne du thermostat mesurant la température ambiante et agissant sur la charge des dispositifs de chauffage à accumulation et de la consigne affichée à un second thermostat d'ambiance de ce local fixant la vitesse de rotation des ventilateurs de déstockage et, d'autre part, à piloter le cas échéant la relance de la charge ou un chauffage direct complémentaire durant les périodes à plein tarif en fonction de la vitesse des ventilateurs de déstockage, donc de la position de la température ambiante sur la bande proportionnelle du second thermostat d'ambiance, de la valeur de la progression de la température ambiante durant un cycle de mesure déterminé et du niveau de charge des dispositifs de chauffage à accumulation.

5. Procédé selon la revendication 3, caractérisé en ce qu'il consiste, lorsque la température ambiante est supérieure à la consigne de charge et à la consigne de température ambiante, à réaliser la charge, en période à tarif réduit, aussi longtemps que la valeur de la chute de la température ambiante durant le cycle de mesure est supérieure à un premier seuil préfixé sur un régulateur.

6. Procédé selon la revendication 3, caractérisé en ce qu'il consiste, lorsque la température ambiante est supérieure aux consignes de charge et de température ambiante, à réaliser la charge, en période à tarif réduit, aussi longtemps que la température ambiante ne progresse pas pendant un intervalle de temps qui s'arrête à la fin de la dernière période à tarif réduit du cycle de 24 heures en cours, la durée de cet intervalle étant ajustable et réglable.

7. Procédé selon l'une quelconque des revendications 1 à 6, caractérisé en ce qu'il consiste à piloter le comptage et/ou le décomptage des consommations d'énergie au début de la période à tarif réduit la plus longue d'un cycle de durée déterminée, par exemple de 24 heures, ladite période étant repérée au moyen d'une synchronisation électronique laquelle pilote ledit comptage et/ou décomptage.

8. Procédé selon l'une quelconque des revendications 1 à 7, caractérisé en ce qu'il consiste à déterminer la durée correspondant à la charge totale du cycle précédent, à majorer cette durée d'une quantité déterminée de manière à obtenir une durée hypothétique de charge, en période à tarif réduit, pour le cycle en cours, et à décaler l'instant de début de charge vers la fin de la ou des périodes à tarif réduit du cycle en cours, ou à centrer la période de charge par rapport à ladite ou aux dites périodes, ce en fonction de la durée hypothétique totale de charge déterminée.

9. Procédé selon l'une quelconque des revendications 1 à 8 caractérisé en ce que la valeur de la température de consigne du thermostat mesurant la température ambiante et agissant sur la charge en période à tarif réduit est corrigée automatiquement et proportionnellement aux besoins de chaleur, dès que l'écart entre la consigne de température ambiante et la consigne de température dudit thermostat, intégré sur la durée totale de la ou des périodes à plein tarif d'un cycle de durée déterminée dépasse la valeur autorisée par l'énergie calorifique stockée.

10. Procédé selon l'une quelconque des revendications 1 à 9, caractérisé en ce qu'il consiste à commander, en période à plein tarif, plusieurs dispositifs de chauffage électrique par accumulation en déterminant un dispositif principal et un ou plusieurs dispositifs secondaires dont la commande en charge et en décharge ou déstockage est asservie à celle du dispositif principal par comparaison des températures de leurs noyaux d'accumulation d'énergie calorifique respectifs à celle du noyau dudit dispositif principal.

11. Dispositif de régulation pour la mise en oeuvre du procédé selon l'une quelconque des revendications 1 à 10, caractérisé en ce qu'il est principalement constitué par un organe de sélection (3, 3-1 ,3-2) commandé par le ou les signaux tarifaires du réseau de distribution d'énergie électrique calé(s) sur les périodes à tarif réduit et permettant de relier, pendant les périodes à tarif réduit, un circuit (31) de commande conditionnelle de la charge en période à tarif réduit et, le cas échéant, pendant les périodes à tarif plein autorisées, un circuit (32) de commande conditionnelle de la charge ou d'un chauffage direct en période à plein tarif, à un organe de contrôle (13) déterminant, par l'intermédiaire d'au moins un interrupteur (13-1, 13-2) l'alimentation électrique des résistances de charge (14, 15) du ou des dispositifs de chauffage électriques à accumulation régulés, le circuit (31) de commande de la charge en période à tarif réduit étant composé par au moins deux branches parallèles comprenant chacune un interrupteur (5-1, 7-1), commandés à l'ouverture, respectivement, d'une part, par un compteur d'énergie (C3 ou C4) parmi deux compteurs présents, durant les périodes à tarif réduit, ces compteurs étant remis à zéro alternativement au début de la période principale à tarif réduit de chaque nouveau cycle et inversés dans leur mode d'utilisation en comptage ou décomptage à chacune desdites périodes à tarif réduit par un synchronisateur (30), et, d'autre part, par un thermostat (7) mesurant la température ambiante et dont la consigne est fixée lors de sa fabrication, tout en étant légèrement ajustable.

12. Dispositif selon la revendication 11, caractérisé en ce qu'il comporte un second thermostat (19) mesurant la température ambiante, dont la consigne est réglable par l'utilisateur et qui est associé à un régulateur (20) à bande proportionnelle commandant le fonctionnement des ventilateurs de déstockage (18) du ou des dispositifs de chauffage électriques à accumulation, un circuit (33) de mesure de l'évolution de la température sur une période déterminée après action des ventilateurs de déstockage (18) et de commande conditionnelle de la relance de la charge en période à plein tarif, étant relié audit régulateur (20).

13. Dispositif selon la revendication 12, caractérisé en ce que le circuit (31) de commande conditionnelle de la charge en période à tarif réduit comprend trois branches parallèles pouvant commander, chacune, à elle seule, la charge et, comportant, l'une un interrupteur(5-1) commandé à l'ouverture par au moins un compteur d'énergie (C3, C4) lorsque la consommation d'énergie durant les heures à tarif réduit du cycle en cours dépasse une fraction donnée, par exemple 70 %, de la consommation totale du cycle précédent de 24 heures, ou lorsque la consommation du cycle en cours, atteint la valeur de celle du cycle précédent diminuée de la consommation correspondant à une durée constante, par exemple, de l'ordre de deux heures, l'autre un interrupteur (7-1) commandé à l'ouverture par le premier thermostat (7) régulant la température ambiante lorsque cette dernière dépasse la valeur de consigne dudit thermostat (7), et, enfin, la dernière un interrupteur (6-1) commandé à l'ouverture, le cas échéant au moyen d'un amplificateur opérationnel (20), par le second thermostat (19) mesurant la température ambiante lorsque cette dernière dépasse la valeur de la consigne préréglée dudit thermostat (19), par exemple de l'ordre de 0,2° C à 0,5° C ou une valeur prédéfinie sur sa bande proportionnelle, les compteurs d'énergie (C3, C4) étant contrôlés par le synchronisateur qui au début de la période à tarif réduit la plus longue d'un cycle de 24 heures commande alternativement à chaque cycle la remise à zéro et le comptage de l'énergie durant 24 heures sur l'un (C3) desdits compteurs ainsi que le décomptage durant les heures à tarif réduit sur l'autre (C4) desdits compteurs.

14. Dispositif selon la revendication 12, caractérisé en ce que le circuit (32) de commande conditionnelle de la charge en période à plein tarif comporte une seule branche intégrant deux interrupteurs (10-1, 11) en série, dont l'un est commandé à la fermeture lorsque le niveau de charge du ou des dispositifs de chauffage électriques par accumulation chute en-dessous de la valeur de consigne d'un coupe circuit thermique, définie par la puissance calorifique maximale dudit dispositif et dont l'autre (10-1) est commandé à la fermeture lorsque la vitesse des ventilateurs de déstockage (18) est supérieure à une valeur prédéterminée définie par la position de la température ambiante sur la bande proportionnelle du thermostat (19) et que la valeur de la progression de la température ambiante, déterminée par le circuit (33) de mesure de l'évolution, entre le début et la fin d'un cycle répétitif de mesure de 5 à 60 minutes de durée, est inférieure à un seuil de l'ordre de 0,5° C sur 15 minutes, la valeur de ce seuil pouvant être réduite lorsque la température ambiante dépasse de quelques degrés la température de consigne de charge et la relance de la charge pouvant être coupée lorsque ce dépassement atteint une valeur prédéterminée.

15. Dispositif selon l'une quelconque des revendications 11 à 14, caractérisé en ce qu'il comporte un organe (9, 9-1, 9-2) de sélection d'un fonctionnement en mode hors gel du ou des dispositifs de chauffage électriques à accumulation, relié à une résistance chauffante (8) influençant la valeur de la consigne du premier thermostat (7) de mesure de température ambiante, en la réduisant de l'ordre de 5° C à 10° C environ.

16. Dispositif selon l'une quelconque des revendications 11 à 15 et caractérisé en ce que les organes de sélection, les thermostats et les différents interrupteurs consistent en des contacts mécaniques, notamment de relais.

17. Dispositif selon l'une quelconque des revendications 11 à 15, caractérisé en ce que les organes de sélection, les thermostats et les différents interrupteurs consistent en des circuits électroniques.

18. Dispositif selon l'une quelconque des revendications 12 à 17, caractérisé en ce que le régulateur (20) bloque le fonctionnement dudit dispositif et émet, le cas échéant, un signal d'avertissement, lorsque les caractéristiques techniques d'un dispositif de chauffage électrique à accumulation au moins, relié audit dispositif, ne correspondent pas aux paramètres enregistrés dans ledit régulateur (20).

## Patentansprüche

1. Verfahren zum Regeln des Wärmeeinspeicherns in wenigstens eine elektrische Speicherheizung, wie elektrische Speicherheizkörper, Fußbodenheizung oder dergleichen, dadurch gekennzeichnet, daß es für einen bestimmten, zu heizenden Raum im wesentlichen darin besteht, das Speichern oder den Speichervorgang der elektrischen Speicherheizung(en) während der Zeiten mit niedrigem Tarif des Energieversorgungsnetzes eines Zyklus mit vorbestimmter Zeitdauer als Funktion des Energieverbrauchs der Speicherheizung(en) während eines vorhergehenden, identischen Zyklus und als Funktion der Soll-Temperatur eines die Raumtemperatur messenden und auf das Speichern oder den Speichervorgang der elektrischen Speicherheizung(en) einwirkenden Thermostats zu steuern und das Speichern zu unterbrechen, wenn der Verbrauch an elektrischer Energie des laufenden Zyklus einen voreingestellten Bruchteil des Gesamtverbrauchs des vorhergehenden Zyklus erreicht hat und wenn die Raumtemperatur die Soll-Temperatur des Thermostats erreicht hat.

2. Verfahren nach Anspruch 1, dadurch gekennzeichnet, daß, wenn die Raumtemperatur höher als die Soll-Temperatur des auf das Speichern einwirkenden Thermostats und niedriger als die Soll-Temperatur eines die Raumtemperatur regelnden zweiten Thermostats ist, solange gespeichert wird, bis eine voreingestellte Raumtemperaturschwelle auf dem Proportionalband dieses zweiten Raumtemperaturthermostats, insbesondere eines elektronischen Thermostats mit Proportionalbeeinflussung der Drehzahl der Heizventilatoren in der oder den elektrischen Speicherheizung(en) innerhalb des durch das Proportionalband festgelegten Intervalls erreicht ist.

3. Verfahren nach Anspruch 1 oder 2, dadurch gekennzeichnet, daß, wenn die Raumtemperatur höher als die Soll-Temperatur für das Speichern und die Soll-Raumtemperatur ist, während der Periode mit niedrigem Tarif solange gespeichert wird, wie die Raumtemperatur unterhalb der durch die gesamte kalorische Masse des Raums erlangten Temperatur liegt.

4. Verfahren nach einem der Ansprüche 1 bis 3, dadurch gekennzeichnet, daß das Einspeichern in die Speicherheizungen eines Raums während eines gegebenen Zyklus einerseits während der Perioden mit niedrigem Tarif als Funktion des Verbrauchs während eines vorhergehenden identischen Zyklus, der Soll-Temperatur des die Raumtemperatur messenden und auf das Speichern der Speicherheizungen einwirkenden Thermostats sowie dem eingestellten Soll-Wert eines Raumthermostats in diesem Raum, der die Drehzahl der Heizventilatoren einstellt und andererseits gegebenenfalls die Wiederaufnahme des Speicherns oder eine direkte Zusatzheizung während der Perioden mit vollem Tarif als Funktion der Drehzahl der Heizventilatoren, d. h. der Lage der Raumtemperatur auf dem Proportionalband des zweiten Raumthermostats, des Temperaturanstiegswerts während eines bestimmten Meßzyklus und des Speicherzustands der Speicherheizungen gesteuert wird.

5. Verfahren nach Anspruch 3, dadurch gekennzeichnet, daß, wenn die Raumtemperatur oberhalb des Soll-Speicherzustands und der Soll-Raumtemperatur liegt, solange während der Periode mit niedrigem Tarif gespeichert wird, wie der Raumtemperaturabfallwert während des Meßzyklus größer als eine an einem Regler eingestellte erste Schwelle ist.

6. Verfahren nach Anspruch 3, dadurch gekennzeichnet, daß, wenn die Raumtemperatur oberhalb des Soll-Speicherzustands und der Soll-Raumtemperatur liegt, solange während der Periode mit niedrigem Tarif gespeichert wird, wie die Raumtemperatur nicht während eines einstellbaren und regelbaren Zeitintervalls ansteigt, das mit dem Ende der letzten Periode mit niedrigem Tarif im laufenden 24-Stunden-Zyklus endet.

7. Verfahren nach einem der Ansprüche 1 bis 6, dadurch gekennzeichnet, daß das Aufwärts- und/oder Abwärtszählen des Energieverbrauchs am Anfang der längsten Periode mit niedrigem Tarif eines Zyklus mit vorgegebener Dauer, beispielsweise 24 Stunden gesteuert wird, wobei diese Periode mittels einer elektronischen Synchronisierung bestimmt wird, die das Aufwärtszählen und/oder Abwärtszählen steuert.

8. Verfahren nach einem der Ansprüche 1 bis 7, dadurch gekennzeichnet, daß die einer vollständigen Speicherung des vorhergehenden Zyklus entsprechende Dauer bestimmt wird, diese Dauer um eine vorbestimmte Größe verlängert wird, um eine hypothetische Speicherungsdauer für die Periode mit niedrigem Tarif und während des laufenden Zyklus zu bestimmen und daß der Moment, an dem das Speichern beginnt, gegen das Ende der Periode(n) mit niedrigem Tarif des laufenden Zyklus verschoben wird oder die Speicherungsperiode mit Bezug auf die vorgenannten Perioden als Funktion der vorgegebenen Gesamteinspeicherungsdauer zentriert wird.

9. Verfahren nach einem der Ansprüche 1 bis 8, dadurch gekennzeichnet, daß der Soll-Temperaturwert des die Raumtemperatur messenden Thermostats, der das Speichern während der Periode mit niedrigem Tarif bewirkt, automatisch und proportional zum Wärmebedarf korrigiert wird, sobald die Abweichung zwischen der Soll-Raumtemperatur und der Soll-Temperatur dieses Thermostats, integriert über die Gesamtdauer der Periode(n) mit vollem Tarif eines Zyklus mit vorbestimmter Dauer den durch die gespeicherte Wärmeenergie zugelassenen Wert überschreitet.

10. Verfahren nach einem der Ansprüche 1 bis 9, dadurch gekennzeichnet, daß mehrere elektrische Speicherheizungen während der Periode mit vollem Tarif in der Weise gesteuert werden, daß eine Hauptspeicherheizung und mehrere Nebenspeicherheizungen bestimmt werden, wobei die Steuerung des Wärmespeicherns und der Wärmeabgabe von der Hauptspeicherheizung abhängig ist, indem die Temperatur ihrer jeweiligen Wärmespeicherelemente mit derjenigen des Wärmespeicherelements der Hauptspeicherheizung verglichen wird.

11. Regelvorrichtung zur Durchführung des Verfahrens gemäß einem der Ansprüche 1 bis 10, gekennzeichnet im wesentlichen durch einen Umschalter (3,3-1,3-2), der durch die Tarifsignale der Perioden mit niedrigem Tarif des elektrischen Energieversorgungsnetzes angesteuert wird und der es erlaubt, während der Periode mit niedrigem Tarif einen Schaltkreis zur bedingten Steuerung des Speicherns während der Periode mit niedrigem Tarif und gegebenenfalls während der zugelassenen Periode mit vollem Tarif sowie einen Schaltkreis (32) zur bedingten Steuerung des Einspeicherns oder einer direkten Heizung während einer Periode mit vollem Tarif mit einem Steuerschaltkreis (13) zu verbinden, der über wenigstens einen Schalter (13-1,13-2) die Stromversorgung der Ladewiderstände (14,15) der elektrischen, geregelten Speicherheizungen bestimmt, wobei der Schaltkreis (31) zur Steuerung des Speicherns während der Periode mit niedrigem Tarif aus wenigstens zwei Parallel-Zweigen mit jeweils einem Schalter (5-1,7-1) besteht, die jeweils einerseits durch einen von zwei Energiezählern (C3 oder C4) während der Perioden mit niedrigem Tarif geöffnet werden, wobei diese Zähler abwechselnd zu Beginn der Hauptperiode mit niedrigem Tarif eines jeden neuen Zyklus auf Null zurückgestellt werden und in ihrer Zählrichtung bei jeder der Perioden mit niedrigem Tarif durch eine Synchronisiervorrichtung (30) umgeschaltet werden und andererseits durch einen Thermostat (7), der die Raumtemperatur mißt und dessen Soll-Temperatur bei der Herstellung eingestellt wird, jedoch einen kleinen Einstellbereich aufweist, geöffnet werden.

12. Vorrichtung nach Anspruch 11, dadurch gekennzeichnet, daß ein zweiter die Raumtemperatur messender Thermostat (19) durch den Benutzer einstellbar ist und einem Regler (20) mit einem Proportionalband, der den Betrieb der Heizventilatoren (18) der elektrischen Speicherheizung(en) steuert, zugeordnet ist, und daß ein Meßschaltkreis (33), der den Temperaturverlauf während einer vorbestimmten Periode nach dem Betrieb der Heizventilatoren (18) und der bedingten Ansteuerung der Wiederaufnahme des Speicherns während einer Periode mit vollem Tarif mißt, mit dem Regler (20) verbunden ist.

13. Vorrichtung nach Anspruch 12, dadurch gekennzeichnet, daß der Schaltkreis (31) zur bedingten Steuerung des Speicherns während der Periode mit niedrigem Tarif drei Parallelzweige umfaßt, deren jeder für sich allein in der Lage ist, das Speichern zu steuern, und daß ein Parallelzweig einen durch wenigstens einen Energiezähler (C3,C4) gesteuerten Schalter (5-1) besitzt, der geöffnet wird, wenn der Energieverbrauch während der Periode mit niedrigem Tarif des laufenden Zyklus einen vorgebbaren Bruchteil, beispielsweise 70% des Gesamtverbrauchs des vorhergehenden Zyklus von 24 Stunden übersteigt oder wenn der Energieverbrauch des laufenden Zyklus den Wert des vorhergehenden Zyklus, vermindert um den einer konstanten Dauer, beispielsweise etwa 2 Stunden, entsprechenden Energieverbrauch, erreicht, daß ein anderer einen durch den ersten, die Raumtemperatur regelnden Thermostat (7) gesteuerten Schalter (7-1) geöffnet wird, wenn die Raumtemperatur den Soll-Wert des Thermostats (7) überschreitet und daß schließlich der letzte einen durch den zweiten, die Raumtemperatur messenden Thermostat (19), gegebenenfalls mittels eines Operationsverstärkers (20) gesteuerten Schalter (6-1) geöffnet wird, wenn die Raumtemperatur den voreingestellten Wert des Thermostats (19), beispielsweise in der Größenordnung von 0,2° bis 0,5°C oder eines anderen, vorbestimmten Werts seines Proportionalbandes überschreitet, und daß die Energiezähler (C3, C4) durch die Synchronisiervorrichtung gesteuert werden, indem zu Anfang der längsten Periode mit niedrigem Tarif eines Zyklus von 24 Stunden wechselweise bei jedem Zyklus das Zurückstellen auf Null und die Energieverbrauchszählung während 24 Stunden durch den Zähler (C3) sowie das Rückwärtszählen während der Zeit mit niedrigem Tarif durch den Zähler (C4) gesteuert werden.

14. Vorrichtung nach Anspruch 12, dadurch gekennzeichnet, daß der Schaltkreis (32) zur bedingten Steuerung des Speicherns während der Periode mit vollem Tarif einen einzigen Zweig mit zwei in Serie geschalteten Schaltern (10-1, 11) aufweist, von denen der eine geschlossen wird, wenn die gespeicherte Wärmemenge der elektrischen Speicherheizung(en) unterhalb des Soll-Werts eines thermischen Schalters, der durch die maximale thermischen Leistung der Vorrichtung vorgegeben ist, abfällt und von denen der andere geschlossen wird, wenn die Drehzahl der Heizventilatoren (18) oberhalb eines vorgegebenen, durch die Lage der Raumtemperatur auf dem Proportionalband des Thermostats (19) bestimmten Wert liegt, und der durch die Meßschaltung (33) zwischen dem Beginn und dem Ende einer wiederholten Meßperiode von 5 bis 60 Minuten Dauer gemessene Wert für den Anstieg der Raumtemperatur niedriger als eine Schwelle in der Größenordnung von 0,5°C über 15 Minuten liegt, daß diese Schwelle herabgesetzt werden kann, wenn die Raumtemperatur die Soll-Speichertemperatur um einige Grade überschreitet, und daß der Wiederbeginn des Speicherns unterbrochen werden kann, wenn diese Überschreitung einen vorgegebenen Wert erreicht.

15. Vorrichtung nach einem der Ansprüche 11 bis 14, dadurch gekennzeichnet, daß ein Schaltorgan (9,9-1,9-2) der elektrischen Speicherheizung(en) zum wahlweisen Einschalten einer Betriebsweise "Kein Frostwetter" den Soll-Wert des ersten Thermostats (7) zum Messen der Raumtemperatur im Sinne einer Herabsetzung in der Größenordnung von ungefähr 5° bis 10°C beeinflußt und mit einem Heizwiderstand (8) verbunden ist.

16. Vorrichtung nach einem der Ansprüche 11 bis 15, dadurch gekennzeichnet, daß die Schaltorgane, die Thermostate und die verschiedenen Schalter aus mechanischen Kontakten, insbesondere Relais, bestehen.

17. Vorrichtung nach einem der Ansprüche 11 bis 15, dadurch gekennzeichnet, daß die Schaltorgane, die Thermostate und die verschiedenen Schalter aus elektronischen Schaltkreisen bestehen.

18. Vorrichtung nach einem der Ansprüche 12 bis 17, dadurch gekennzeichnet, daß der Regler (20) das Arbeiten der Vorrichtung unterbricht und gegebenenfalls ein Warnsignal erzeugt, wenn die technischen Merkmale wenigstens einer mit der Vorrichtung verbundenen elektrischen Speicherheizung nicht mit den in den Regler (20) eingegebenen Parametern übereinstimmen.

## Claims

1. Process for regulating the charge of at least one electrical storage heating device, such as an electric storage radiator, under-floor heating system or similar device, characterized in that it essentially consists, for given premises to be heated, of controlling the charge or the charging operation of one or more electrical storage devices during reduced tariff periods with a cycle of fixed specific duration of the electrical distribution network, based on the power consumption of said device (s) during a previous identical cycle and on the value of the reference temperature of a thermostat measuring the ambient temperature and acting upon the charge or charging operation of the electrical storage heating device(s), said charge being cut off when the electricity consumed during the cycle in progress has reached a pre-set fraction of the total power consumption of the previous cycle and when the ambient temperature has reached the reference temperature of the above-mentioned thermostat.

2. Process according to claim 1, characterized in that it consists, when the ambient temperature is higher than the reference temperature of the thermostat acting upon the charge and lower than the reference temperature of a second thermostat regulating the ambient temperature, of producing the charge until the reaching of an ambient temperature threshold previously set on the proportional band of this second room thermostat, in particular of the electronic type, which has a proportional effect on the dissipation fans of the storage heating device(s), within the interval specified by said proportional band.

3. Process according to any one of claims 1 and 2, characterized in that it consists, when the ambient temperature is higher than the reference charging temperature and the reference ambient temperature, of producing the charge during reduced tariff periods, for as long as said ambient temperature is lower than that attained by the overall calorific mass of the premises.

4. Process according to any one of claims 1 to 3, characterized in that it consists, on the one hand, of controlling, during a predetermined cycle, the charge of the storage heating devices of premises during reduced tariff periods based on the consumption of the previous identical cycle, on the value of the reference temperature of the thermostat measuring the ambient temperature and acting upon the charge of the storage heating devices, and, on the reference temperature displayed by a second room thermostat in these premises which regulates the speed of rotation of the dissipation fans and on the other hand, of controlling, if required, restart of the charging process or additional direct heating during full tariff periods, depending on the speed of the dissipation fans and therefore on the position of the ambient temperature on the proportional band of the second room thermostat, on the value of the progression in the ambient temperature during a specified measurement cycle, and on the charge level of the storage heating devices.

5. Process according to claim 3, characterized in that it consists, when the ambient temperature is higher than the reference charging temperature and the reference ambient temperature, of producing the charge, during reduced tariff periods, for as long as the value of the fall in the ambient temperature during the measurement cycle is greater than an initial threshold pre-set on a regulator.

6. Process according to claim 3, characterized in that it consists, when the ambient temperature is higher than the reference charging temperature and the reference ambient temperature, of producing the charge, during reduced tariff periods, for as long as the ambient temperature does not proceed during an interval of time which terminates at the end of the last reduced tariff period of the current 24-hour cycle, the duration of this interval being adjustable and controllable.

7. Process according to any one of claims 1 to 6, characterized in that it consists of controlling the up-and/or down-counting of the power consumption at the start of the longest reduced tariff period in a cycle of specified duration, for example 24 hours, said period being delimited by means of an electronic timer which controls said up- and/or down-counting.

8. Process according to any one of claims 1 to 7, characterized in that it consists of determining the period corresponding to the total charge of the preceding cycle, of increasing this period by a specified amount in order to obtain a hypothetical charging period, in reduced tariff periods, for the current cycle, and of shifting the time at which the charging period commences towards the end of the reduced tariff period(s) of the current cycle, or of centring the charging period with respect to said period(s), according to the specified total hypothetical charging period.

9. Process according to any one of claims 1 to 8, characterized in that the value of the reference temperature of the thermostat measuring the ambient temperature and acting upon the charge during reduced tariff periods is adjusted automatically and proportionally according to the need for heat, as soon as the difference between the reference ambient temperature and the reference temperature of said thermostat, integrated over the total duration of the full tariff period(s) of a cycle of specified duration, exceeds the value authorised by the stored heat energy.

10. Process according to any one of claims 1 to 9, characterized in that it consists of controlling, during full tariff periods, several electric storage heating devices by specifying a main device and one or more secondary devices whose charging, discharging or dissipation operations are controlled by the main device by comparison of the temperatures of their heat energy storage cores with that of the core of the main device.

11. Regulating device for carrying out the process according to any one of claims 1 to 10, characterized in that it consists mainly of a selection component (3, 3-1, 3-2) controlled by the tariff signal(s) of the electricity distribution network set to the reduced tariff periods and allowing connection, during reduced tariff periods, of a circuit (31) to conditionally control the charge in reduced tariff periods and, if required, during authorised full tariff periods, of a circuit (32) to conditionally control the charge or direct heating in full tariff periods, to a control unit (13) which determines, by means of at least one switch (13-1, 13-2), the electrical supply of the charge resistors (14, 15) of the regulated electric storage heating devices, the circuit (31) controlling the charge in reduced tariff periods consisting of at least two parallel branches each containing a switch (5-1, 7-1), and opened, respectively, on the one hand, by one electricity meter (C3 or C4) of the two meters present, during the reduced tariff periods, these meters being reset to zero alternately at the start of the main reduced tariff period in each new cycle and reversed in their mode of up- or down-counting usage at each of said reduced tariff periods by a synchroniser (30), and, on the other, by a thermostat (7) measuring the ambient temperature and whose reference value is fixed during manufacture, but can be adjusted to a limited extent.

12. Device according to claim 11, characterized in that it comprises a second thermostat (19) measuring the ambient temperature, whose reference value is adjustable by the user and which is associated with a proportional band regulator (20) which controls the operation of the dissipation fans (18) of the electric storage heating devices, a circuit (33) for measuring the temperature change over a specified period after operation of the dissipation fans (18) and for conditionally controlling the restart of the charging operation in full tariff periods, being connected to said regulator (2).

13. Device according to claim 12, characterized in that the circuit (31) which conditionally controls the charge during reduced tariff periods comprises three parallel branches, each of which can, alone, control the charge and of which one contains a switch (5-1) opened by at least one electricity meter (C3, C4) when the power consumption during the reduced tariff hours of the current cycle exceeds a given fraction, for example 70%, of the total consumption of the preceding 24-hour cycle, or when the consumption of the current cycle reaches the value of that for the previous cycle minus the consumption corresponding to a constant period, of the order of 2 hours for example, the second a switch (7-1) opened by the first thermostat (7) controlling the ambient temperature when the latter exceeds the reference value of said thermostat (7), and, lastly, the third a switch (6-1) opened, if required, by means of an operational amplifier (20), by the second thermostat (19) measuring the ambient temperature when the latter exceeds the pre-set reference temperature of said thermostat (19), for example by about 0.2°C to 0.5°C, or a predefined value on its proportional band, the electricity meters (C3, C4) being controlled by the synchroniser which, at the start of the longest reduced tariff period in a 24-hour cycle, alternately controls on each cycle the zero setting and up-counting of electricity over 24 hours on one (C3) of said meters and the down-counting during the reduced tariff hours on the other (C4) of said meters.

14. Device according to claim 12, characterized in that the circuit (32) which conditionally controls the charge during full tariff periods comprises a single branch incorporating two switches (10-1, 11) in series, one of which is closed when the charge level of the electric storage heating device(s) falls below the reference value of a thermal circuit-breaker, said value being determined by the maximum calorific power of said device, and the other (10-1) closed when the speed of the dissipation fans (18) is greater than a specified value determined by the position of the ambient temperature on the proportional band of the thermostat (19) and the value of the progression in the ambient temperature, determined by the change measurement circuit (33), between the beginning and end of a repetitive measurement cycle of between 5 and 60 minutes in duration, is less than a threshold of about 0.5°C over 15 minutes, it being possible to reduce the value of this threshold when the ambient temperature exceeds the charge reference temperature by a few degrees, and to prevent restart of the charging operation when the excess ambient temperature reaches a predetermined value.

15. Device according to any one of claims 11 to 14, characterized in that it comprises a device (9, 9-1, 9-2) for selecting a function, in frost-free mode, of the electric storage heating device(s), connected to a heating resistor (8) influencing the reference value of the first ambient temperature-measuring thermostat (7), by reducing it by about 5°C to 10°C.

16. Device according to any one of claims 11 to 15, characterized in that the selection devices, the thermostats and the various switches consist of mechanical contacts, in particular relays.

17. Device according to any one of claims 11 to 15, characterized in that the selection devices, the thermostats and the various switches consist of electronic circuits.

18. Device according to any one of claims 12 to 17, characterized in that the regulator (20) locks the operation of said device and, if required, emits a warning signal, when the technical characteristics of at least one electric storage heating device, connected to said device, do not correspond to the parameters recorded in said regulator (20).
